# EUROPEAN PATENT APPLICATION

(11) **EP 4 357 519 A1**
(43) Date of publication of application: **24.04.2024**
(21) Application number: 23194484.4
(22) Date of filing: 31.08.2023
(51) Int. Cl.: D21F 3/10

(54) **SUCTION ROLL AND A SEAL SETUP OF A SUCTION ROLL**

(30) Priority: 19.10.2022 FI 20225943
(71) Applicant: Valmet Technologies Oy, 02150 Espoo (FI)
(72) Inventor: KETTUNEN, Heikki, 04400 Järvenpää (FI); TOIKKANEN, Jukka, 64297 Darmstadt (DE); MÅNSSON, Carl, 651 15 Karlstad (SE); MATTSSON, Kenneth, 651 15 Karlstad (SE); HEIKKINEN, Jukka T., 40700 Jyväskylä (FI); PITKÄNEN, Tatu, 04400 Järvenpää (FI); BERG, Jonas, 651 15 Karlstad (SE); NORDIN, Andreas, 651 15 Karlstad (SE); KULLGREN, Olle, 651 15 Karlstad (SE); BERG, Anna, 651 15 Karlstad (SE); PIIPONNIEMI, Joni, 40700 Jyväskylä (FI); CHRISTOFFERSEN, Caroline, 651 15 Karlstad (SE)
(74) Representative: Berggren Oy

(57) **Abstract**

The invention relates to a suction roll (30), which comprises a rotatable outer shell (31), which has a plurality of openings (32) arranged spaced apart along the circumference of the outer shell (31), and an inside the rotatable outer shell (31) arranged in axial direction of the suction roll (30) extending stationary suction box (33), which comprises two side walls and a lower wall extending between the side walls, and a setup of seals (34, 35) configured to seal the suction box (33) against inner surface of the rotatable outer shell (31) by the seals (34, 35) of the seal setup, which seals (34, 35) are by lubrication medium lubricated seals and extend in axial direction of the suction roll (30) and are located on the side walls of the suction box (33) at edges of the side walls pointing towards the inner surface of the rotatable outer shell (31) of the suction roll (30). The outer shell (31) of the suction roll (30) is rotatable in both rotation directions (S30) and that the seals (34, 35) are similar and located in the seal setup as mirror images to each other. The invention also relates to a seal setup of a suction roll.

## Description

### Technical field

In general, the present invention relates to suction rolls of a fiber web production line and to seal setups thereof. More especially the present invention relates to a suction roll according to preamble part of the independent suction roll claim and to a seal setup of a suction roll according to preamble part of the independent seal setup claim.

### Background

Fiber webs, such as paper and board webs are available in a wide variety of types and can be divided according to basis weight in two grades: papers with a single ply and a basis weight of 25-300 g/m² and boards manufactured in multi-ply technology and having a basis weight of 150-600 g/m². It should be noted that the borderline between paper and board is flexible since board grades with lightest basis weights are lighter than the heaviest paper grades. Generally speaking, paper is used for printing and board for packaging.

The fiber webs are produced in a fiber web producing process. As known from the prior art in fiber web producing processes typically comprise an assembly formed by a number of apparatus arranged consecutively in the process line. A typical production and treatment line comprises a head box, a wire section and a press section as well as a subsequent drying section and a reel-up. The production and treatment line can further comprise other devices and/or sections for finishing the fiber web, for example, a pre-calender, a sizer, a final-calender, a coating section. The production and treatment line also typically comprises at least one slitter-winder for forming customer rolls as well as a roll packaging apparatus.

In production lines for producing fiber webs, for example for production of paper or board webs suction rolls are used in various different positions and for different purposes. Suction rolls can be used for example, as pick-up rolls for transferring a fiber web from one fabric of the fiber web production line to another fabric of the fiber web production line, as rolls forming dewatering nips with other rolls and as rolls guiding the fiber web and/or the fabrics in the fiber web production line.

A suction roll typically comprises an outer shell i.e. a roll mantle (i.e. an outer shell) which has a plurality of openings. In the suction roll the outer shell is rotatable around a stationary suction box located inside the outer shell. The suction box is connected to a low-pressure source in order to provide a suction effect. Also, the suction box has openings such that the underpressure in the suction box provides suction through the openings of the outer shell of the suction roll. The suction box is sealed by seals against inner surface of the outer shell. The seals are typically arranged in holders arranged to the suction box. The holders and the seals extend in the length direction of the suction roll over the substantial inner length of the suction roll. Thus, a suction zone of the suction roll is provided between the seals in radial direction of the suction roll. One known type of seals for suction rolls is so called water lubricating axial seal, in which typically water as lubrication medium is guided between the seal and the inner surface of the rotating outer shell of the suction roll through the seal.

The geometry of seal set-ups of suction rolls known from prior art are designed for suction rolls rotating to one rotation direction and thus, the geometry of the seal setup is typically designed such that it allows and is optimal for one direction rotation of suction roll shell in comparison to axial seals. However, presently exist a need for suction rolls of a fiber web production line, for example of modern tissue web production lines, which suction rolls can be rotated in both directions i.e. counterclockwise and clockwise. This would for example provide possibility of using only one spare roll for sister machines but with opposite drive sides i.e. rotatable in both directions. Thus, instead of having two different dedicated spare suction rolls rotating to different directions, only one spare roll is needed. Additionally, in a fiber web production line there can be a similar suction roll above and below the fiber web, which rolls are rotating in different directions. From the prior art is not known a seal setup for lubrication medium, especially water, lubricating seal design for these modern type of suction rolls allowing both rotation directions.

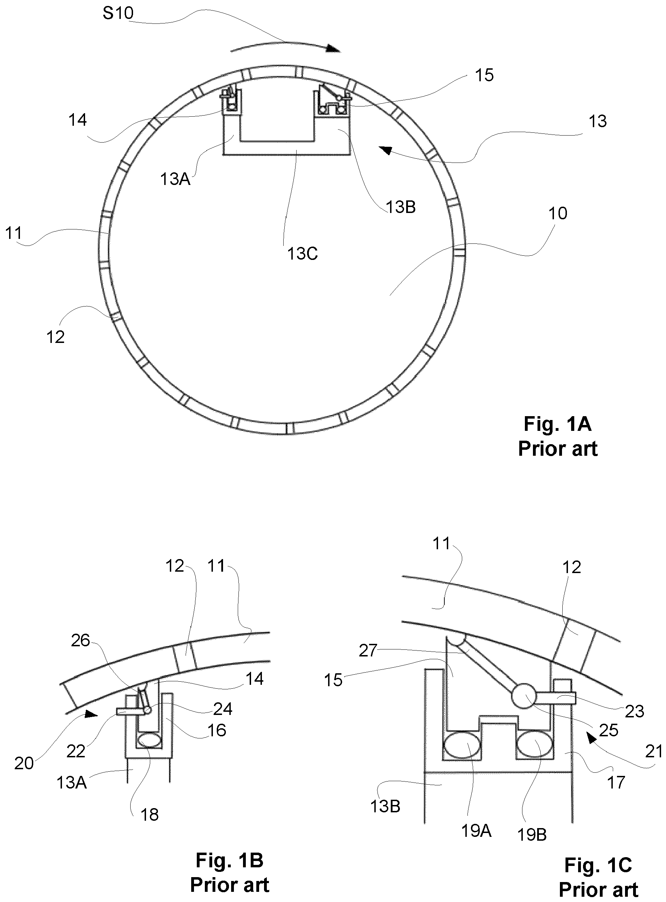

One from prior art known advantageous configuration example of a suction roll rotatable in one direction and its seal setup is disclosed in figures 1A-1C (Figs. 1A-1C, Prior art). The suction roll 10 comprises a rotatable outer shell 11, which has a plurality of openings 12 arranged spaced apart along the circumference of the outer shell 11 and is rotatable in rotation direction S10. Inside the outer shell 11 is arranged in axial direction of the suction roll 10 extending stationary suction box 13, which is sealed against the inner surface of the rotatable outer shell 11 by seals 14, 15, which extend in axial direction of the suction roll 10. Often the seal 15 on the leaving side is wider than the seal 14 on the inlet side as shown in the example of the figures 1A-1C. The suction box 13 has a substantially U-shaped wall structure with two side walls 13A, 13B and a lower wall 13C extending in between the side walls 13A, 13B. In the example of the figures 1A-1C the side wall 13B located downstream in the rotation direction S10 of the outer shell 11 of the suction roll 10 is wider than the side wall 13A located upstream in the rotation direction S10 of the outer shell of the suction roll 10, but the side walls 13A, 13B can also have same width. The suction box 13 is sealed against the inner surface of the outer shell 11 by seals 14, 15. Each of the seals 14, 15 has a seal holder 16, 17 attached to the corresponding side wall 13A, 13B of the suction box 13. The seals 14, 15 and the seal holders 16, 17 extend in the length direction i.e. the axial direction of the suction box 13 and the suction roll 10. The seals 14, 15 arranged in the seal holders 16, 17 are located on the side walls of the substantially U-shaped wall construction of the suction box 13 at the edges of the side walls pointing towards the inner surface of the outer shell 11 of the suction roll 10. In between the seals 14, 15, there is thus arranged the suction zone of the suction roll 10. The rotation direction S10 of the suction roll 10 in the example of the figures 1A-1C is clockwise and as can be noted from the figures the seals 14, 15 are different from each other. In the figure 1A the seal 14 on the inlet side (Fig. 1B, Prior art) is a narrow, simple seal with only one loading hose 18 loading the upper surface of the seal 14 against the inner surface of the outer shell 11 of the suction roll 10. Lubrication means 20, 21 for the lubrication medium are located in rotation direction S10 of the suction roll 10 in connection with the inlet edge of the seal 14. The lubrication means 20, 21 feed the lubrication medium in between the upper surface of the seal 14 and the inner surface of the outer shell 11 of the suction roll 10. The lubrication means 20, 21 comprise lubricant inlet joints 21,22 in the seal holder 16 and correspondingly a channel structure 23 in the seal holder 15 for guiding the lubrication medium. Moreover there is a conduit 24, 25 along the seal 14, 15 inside the seal material structure. Said conduit 24, 25 is connected feed channels 26, 27. In the figure 1A the side seal 15 on the leaving side (Fig. 1C, Prior art) is a wide seal with two loading hoses 19A, 19B loading the upper surface of the seal 15 against the inner surface of the outer shell 11 of the suction roll 10. Lubrication means 21 for the lubrication medium are located in rotation direction S10 of the suction roll 10 to feed the lubrication medium in between the upper surface of the seal 15 and the inner surface of the outer shell 11 of the suction roll 10 in connection with the inlet edge of the seal 15 and comprise channel structure 23 in the seal 15 for guiding the lubrication medium. In case the rotation direction of the suction roll 10 would be counter-clockwise the setup of the seals 14, 15 would be vice versa.

An object of the invention is to create a suction roll rotatable in both directions and a seal setup of a suction roll rotatable in both directions.

### Summary

To achieve the objects mentioned above and those that will be discussed later the suction roll according to the invention is mainly characterized by the features of the characterizing part of the independent suction roll claim. The seal setup for the suction roll, in turn, is mainly characterized by the features of the characterizing part of the independent seal setup claim.

Advantageous features and embodiments of the invention are defined in the dependent claims.

According to the invention the suction roll comprises a rotatable outer shell, which has a plurality of openings arranged spaced apart along the circumference of the outer shell, and inside the rotatable outer shell arranged in axial direction of the suction roll extending stationary suction box, which comprises two side walls and a lower wall extending between the side walls, and a setup of seals configured to seal the suction box against inner surface of the rotatable outer shell by the seals of the seal setup, which seals are by lubrication medium lubricated seals and extend in axial direction of the suction roll and are located on the side walls of the suction box at edges of the side walls pointing towards the inner surface of the rotatable outer shell of the suction roll, wherein the outer shell of the suction roll is rotatable in both rotation directions and the seals are similar and located in the seal setup as mirror images to each other. The invention provides thus a suction roll for a fiber web production line, for example for a modern tissue web production line, which suction rolls can be rotated in both directions i.e. counterclockwise and clockwise. This would for example provide possibility of using only one spare roll for sister machines but with opposite drive sides i.e. rotatable in both directions. Thus, instead of having two different dedicated spare suction rolls rotating to different directions, only one spare roll according to the invention is needed, which is a huge saving.

According to an advantageous feature of the suction roll in accordance with the invention between the seals there is arranged suction zone of the stationary suction box of the suction roll.

According to an advantageous feature of the suction roll in accordance with the invention each of the seals has a seal holder for attaching the seals, the seal holders are attached to the corresponding side wall of the suction box and the seal holders extend in the axial direction of the suction box and the suction roll.

According to an advantageous feature of the suction roll in accordance with the invention the suction box has a substantially U-shaped wall structure. Also the side walls may have substantially same thickness.

According to an advantageous feature of the suction roll in accordance with the invention each seal is a wide seal and the width of the seal is 40-90 mm, advantageously 65-75 mm.

According to an advantageous feature of the suction roll in accordance with the invention the seal has two loading hoses for loading upper surface of the corresponding seal against the inner surface of the outer shell of the suction roll.

According to an advantageous feature of the suction roll in accordance with the invention the seal has two lubrication grooves and two sealing edges extending to immediate vicinity of the inner surface of the outer shell of the suction roll and next to each edge is located the respective lubrication groove and the sealing edges are chamfered. Advantageously there is a lubrication medium film between the inner surface of the outer shell of the suction roll and the sealing edges, at least on the part of the sealing surface, for lubrication.

According to an advantageous feature of the suction roll in accordance with the invention the seal comprises two lubrication grooves and a channel structure for guiding the lubrication medium to lubrication grooves.

According to an advantageous feature of the suction roll in accordance with the invention the lubrication channel structure comprises lubrication channels configured to guide the lubrication medium to the corresponding lubrication grooves and the lubrication channel to the farther lubrication groove is in off-set so that the inlets to the lubrication channels are separate in axial direction of the seal.

According to the invention the seal setup of a suction roll comprises two seals, which are by lubrication medium lubricated seals, wherein the two seals are similar to each other and located in the seal setup as mirror images to each other.

According to an advantageous feature of the seal setup in accordance with the invention the seal has two lubrication grooves and two sealing edges, wherein next to each edge is located the respective lubrication groove and the upper surface of the sealing edges is chamfered.

According to an advantageous feature of the invention the lubrication grooves have bevel edges towards the middle part of the seal. The groove bevels are inclined towards the center of the seal and thus, the lubrication groove area is increased. The groove bevel also directs the lubricant to flow between higher part of the seal in the center and the roll shell. Thus, good lubrication is ensured.

According to an advantageous feature of the seal setup in accordance with the invention the seal comprises two lubrication grooves and a channel structure for guiding the lubrication medium to lubrication grooves.

According to an advantageous feature of the seal setup in accordance with the invention the lubrication channel structure comprises lubrication channels configured to guide the lubrication medium to the corresponding lubrication grooves and the lubrication channel to the farther lubrication groove is in off-set so that the inlets to the lubrication channels are separate in axial direction of the seal.

According to an advantageous aspect of the invention the suction roll rotatable in both directions and the seal setup of the suction roll rotatable in both directions comprises wide axial seals at both edges of the suction zone of the suction roll for the two-way shell rotation. The width of the axial seal is 34; 35 is 40-90 mm, advantageously 65-75 mm.

According to an advantageous aspect of the invention the suction roll rotatable in both directions and the seal setup of the suction roll rotatable in both directions has symmetrical design of the lubrication medium, especially water, lubricated seal and thus, proper and functional lubrication of seal top surface is provided.

According to an advantageous aspect of the invention the suction roll rotatable in both directions and the seal setup of the suction roll rotatable in both directions comprises two lubrication grooves for the lubrication medium on both sides of the seal and thus, sufficient lubrication for the whole top surface of the seal is provided.

According to an advantageous aspect of the invention the suction roll rotatable in both directions and the seal setup of the suction roll rotatable in both directions is adjustable such that some extra lubrication medium goes along the internal surface of the shell of the suction roll to the input side of axial seal due to the two lubrication groove construction by which lubrication medium is provided by the first lubrication groove in the rotation direction to the input side of the seal.

The lubrication channel construction in the seals of the seal setup provides that both lubrication grooves are filled with the lubrication medium.

According to an advantageous aspect of the invention the lubrication channel structure of the seal comprises a lubricant pipe and the lubricant flow is up from the rectangular lubricant pipe. The rectangular lubricant pipe is advantageously rectangular and configured to remain connected when the seal is changed. It also remains structurally stable during loading of the seal. The lubricant pipe provides, that there is no need to uncouple and recouple all the lubricant inlets, when changing the seal. So the seal change is simplified a lot and it can be made faster and even without tools.

The lubrication is also improved as the setup of the seals comprises a loading hose for each protrusion below the seal for each lubrication groove. The loading hoses are advantageously independently for better lubrication. Also, the bevel edges of the lubrication grooves towards the middle part of the seal help with proper lubrication, due to the increased lubrication groove area and due to by the groove bevel between higher part of the seal in the center and the suction roll shell directed lubricant flow.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

### Brief description of the drawings

In the following the invention is further explained in detail with reference to the accompanying drawing in which:
In figures 1A-1C is schematically shown an example of a suction roll and its seal setup known from prior art and
In figures 2A-2C is schematically shown an advantageous example a suction roll and its seal setup according to the invention.

### Detailed description

In the following description same reference signs designate for respective components etc. unless otherwise mentioned and it should be understood that the examples are susceptible of modification in order to adapt to different usages and conditions.

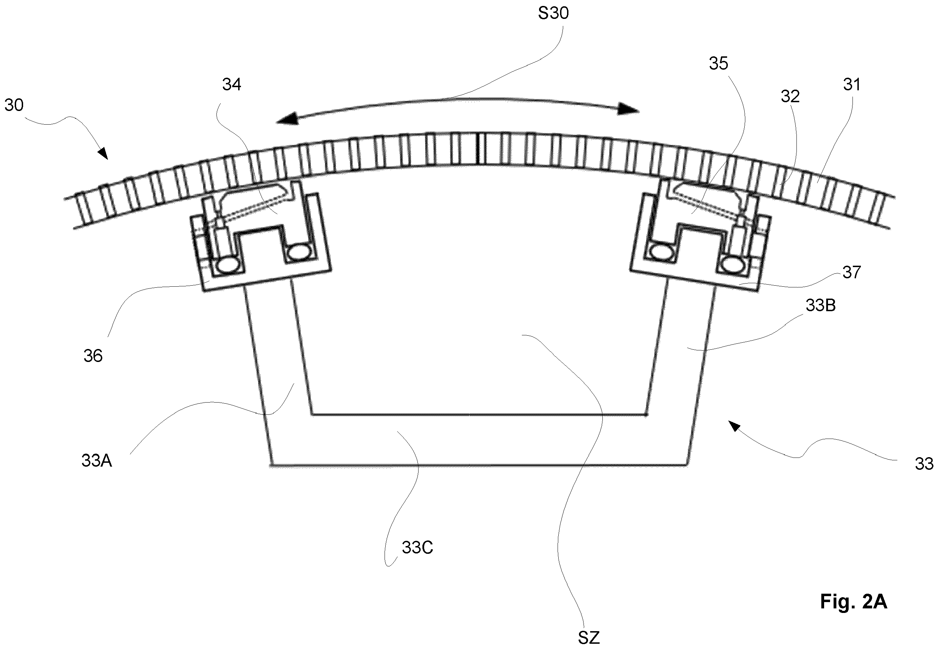

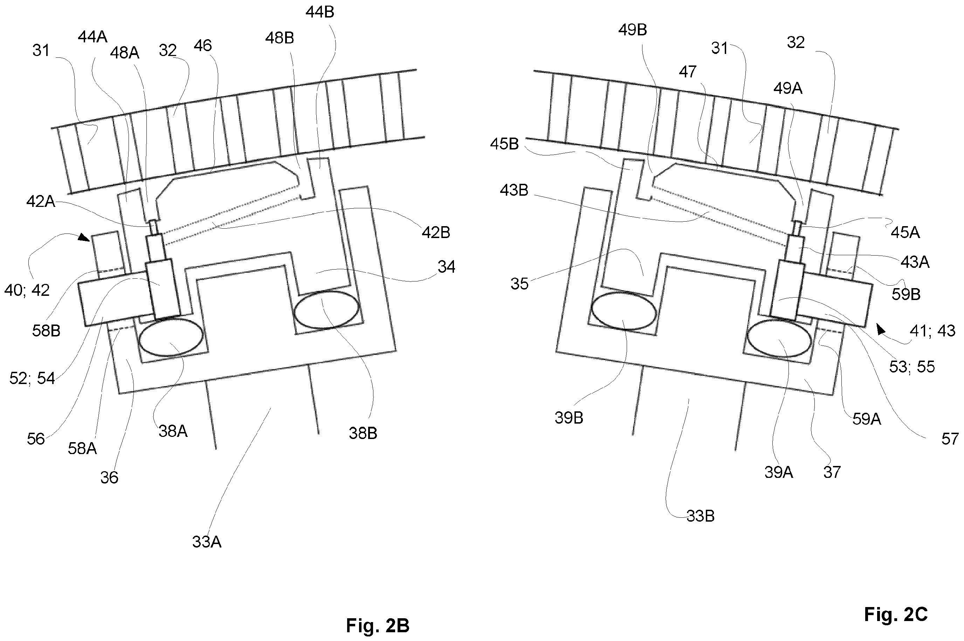

In figures 2A-2C is schematically shown an advantageous example of a suction roll and its seal setup. In figure 2A is schematically shown a partial cross-sectional cut-view of the suction roll 30 and its seal setup. In figures 2B and 2C are schematically shown in more detail partial cross-sectional views of the seal configuration 34, 35 of the seal setup. It is to be understood that the cross-sectional configuration extends between each end of the suction roll 30 in axial i.e. length direction thereof. The end structures of the suction roll 30 are known as such to one skilled in the art. The suction roll 30 comprises a rotatable outer shell 31, which has a plurality of openings 32 arranged spaced apart along the circumference of the outer shell 31. The suction roll 30 is rotatable in two i.e. in both rotation directions S30, to clockwise and to counter-clockwise directions. Inside the rotatable outer shell 31 is arranged in axial direction of the suction roll 30 extending stationary suction box 33, which is sealed against the inner surface of the rotatable outer shell 31 by seals 34, 35, which extend in axial direction of the suction roll 30. The suction box 33 has a substantially U-shaped wall structure with two side walls 33A, 33B and a lower wall 33C extending in between the side walls 33A, 33B. The thickness of the side walls 33A, 33B is substantially same. The suction box 33 is sealed against the inner surface of the outer shell 31 by seals 34, 35. Each of the seals 34, 35 has a seal holder 36, 37 for attaching the seals 34, 35. The seal holders 36, 37 are attached to the corresponding side wall 33A, 33B of the suction box 33. The seals 34, 35 and the seal holders 36, 37 extend in the length direction i.e. the axial direction of the suction box 33 and the suction roll 30. The seals 34, 35 arranged in the seal holders 36, 37 are located on the side walls of the substantially U-shaped wall construction of the suction box 33 at the edges of the side walls 33A, 33B pointing towards the inner surface of the rotatable outer shell 31 of the suction roll 30. In between the seals 34, 35 there is thus arranged the suction zone of the suction roll 30. The seals 34, 35 and the seal holders 36, 37 are similar but in the seal setup located as mirror images to each other. Between the seals 34, 35 is thus arranged the suction zone SZ of the stationary suction box 33 of the suction roll 30. Each seal 34; 35 is a wide seal with two loading hoses 38A, 38B; 39A, 39B for loading the upper surface of the corresponding seal 34; 35 against the inner surface of the outer shell 31 of the suction roll 30.

Lubrication means 40; 41 for the lubrication medium, typically water, are provided in the seal setup of the seals 34; 35 to feed the lubrication medium in between the upper surface of the seal 34; 35 and the inner surface of the outer shell 31 of the suction roll 30. The seal 34; 35 comprises a channel structure 42; 43 in the seal 34; 35 and in the seal holder 36; 37 for guiding the lubrication medium to lubrication grooves 48A, 48B; 49A, 49B of the seals 34; 35. Each seal 34; 35 has thus two lubrication grooves 48A, 48B; 49A, 49B to feed the lubrication medium in between the upper surface of the seal 34;35 and the inner surface of the outer shell 31 of the suction roll 30. The lubrication grooves 48A, 48B; 49A, 49B have bevel edges towards mid sealing surface 46; 47. The groove bevels are inclined towards the center of the seal 34; 35 and thus, the lubrication groove area is increased. The groove bevel also directs the lubricant to flow between higher part of the seal 34; 35 in the center and the roll shell. Thus, good lubrication is ensured.The seal 34; 35 has sealing edges 44A, 44B; 45A; 45B that contact the inner surface of the outer shell 31 of the suction roll 30. Next to each edge 44A, 44B; 45A; 45B inside the seal 34; 35 area is located the lubrication groove 48A, 48B; 49A, 49B and between the lubrication grooves 48A, 48B; 49A, 49B of each seal 34; 35 the mid sealing surface 46; 47 extends. The lubrication channel structure 42; 43 of each seal 34; 35 comprises lubrication channels 42A, 42B; 43A, 43B guiding the lubrication medium to the corresponding lubrication grooves 48A, 48B; 49A, 49B. The lubrication channel structure 42; 43 is connected to a rectangular lubricant pipe 52, 53 below lubrication channels 42A, 42B; 43A, 43B. The lubrication channel structure 42, 43 has a plugged end on the outer surface of the seal 34, 35 and lubricant flow up from the rectangular lubricant pipe 52, 53. The rectangular lubricant pipe 52, 53 is configured to remain connected when the seal 34, 35 is changed. It also remains structurally stable during loading of the seal 34, 35. The lubricant pipe 52, 53 provides, that there is no need to uncouple and recouple all the lubricant inlets, when changing the seal 34; 35. So the seal change is simplified a lot and it can be made faster and even without tools. Advantageously, the seal 34; 35 is provided with an assembly groove 54; 55 for a rectangular lubricant pipe 52; 53 with an inlet connector 56, 57 and advantageously a sensor for wear measurement. The rectangular lubricant pipe 52; 53 is pressed into the assembly groove 54; 55. The lubrication channel structure 42; 43 is machined within the seal 34; 35. The support element 52; 53 is perforated and the respective loading hose 38A, 39A is located below it for pushing the rectangular lubricant pipe upwards. The inlet connector 56, 57 next to rectangular lubricant pipe 52, 53 is nearly as high than the lubricant pipe 52 in the assembly groove 54,55. The dashed lines 58A, 58B; 59A, 59B show the moving margin within the holder 36; 37 and the clearance for the inlet connector 56; 57 during loading situations. The seal 34; 35 is drawn inside the outer shell 31 of the suction roll 30 and the setup of the seals 34, 35 is symmetrical with the seals 34, 35 arranged as mirror-like. As shown by the dotted line the other lubrication channel 42B; 43B is in off-set in machine direction. The lubrication channel 42B, 43B to the farther lubrication groove 48B, 49B is in off-set so that the inlets to the lubrication channels 42A, 42B; 43A, 43B are separate in machine width direction i.e. in length direction of the seal 34, 35 and the suction roll 30. The sealing edges 44A, 44B; 45A; 45B are chamfered towards the middle part of the seal 34, 35 to further improve the lubrication between the seal 34, 35 and the inner surface of the rotating outer shell 31 of the suction roll 30.

The suction roll 30 is rotatable in both directions S30 and the seal setup of the suction roll 30 rotatable in both directions comprises the wide axial seals 34; 35 at both edges of the suction zone SZ of the suction roll 30 for the two-way shell rotation S30. The width of the axial seal 34; 35 is 40-90 mm, advantageously 65-75 mm. The seal setup of the suction roll 30 rotatable in both directions has symmetrical design of the lubrication medium, especially water, lubricated seals 34; 35 and thus, proper and functional lubrication of seal top surface is provided. In the example of the figures 2A-2C each seal 34; 35 comprises two grooves 48A, 48B; 49A, 49B for the lubrication medium on both sides of the seal 34; 35 and thus, sufficient lubrication for the whole top surface 44A, 44B, 46; 45A, 45B, 47 of the seal 34; 35 is provided. Advantageously, the seal 34; 35 is adjustable such that some extra lubrication medium goes along the internal surface of the outer shell 32 of the suction roll 30 to the input side of axial seal 34; 35.

In the description in the foregoing, although some functions and elements have been described with reference to certain features, those functions and elements may be performable by other features whether described or not. Although features have been described with reference to certain embodiments or examples, those features may also be present in other embodiments or examples whether described or not.

Above the invention has been described by referring to some advantageous examples only, to which the invention is not to be narrowly limited. Many modifications and alterations are possible within the inventive idea.

## Claims

1. Suction roll (30), which comprises
- a rotatable outer shell (31), which has a plurality of openings (32) arranged spaced apart along the circumference of the outer shell (31), and
- an inside the rotatable outer shell (31) arranged in axial direction of the suction roll (30) extending stationary suction box (33), which comprises two side walls (33A, 33B) and a lower wall (33C) extending between the side walls (33A, 33B), and
- a setup of seals (34, 35) configured to seal the suction box (33) against inner surface of the rotatable outer shell (31) by the seals (34, 35) of the seal setup, which seals (34, 35) are by lubrication medium lubricated seals and extend in axial direction of the suction roll (30) and are located on the side walls (33A, 33B) of the suction box (33) at edges of the side walls (33A, 33B) pointing towards the inner surface of the rotatable outer shell (31) of the suction roll (30), **characterized in that** the outer shell (31) of the suction roll (30) is rotatable in both rotation directions (S30) and that the seals (34, 35) are similar and located in the seal setup as mirror images to each other.

2. Suction roll according to claim 1, **characterized in that** between the seals (34, 35) is arranged suction zone (SZ) of the stationary suction box (33) of the suction roll (30).

3. Suction roll according to claim 1 or 2, **characterized in that** each of the seals (34, 35) has a seal holder (36, 37) for attaching the seals (34, 35), that the seal holders (36, 37) are attached to the corresponding side wall (33A, 33B) of the suction box (33) and that the seal holders (36, 37) extend in the axial direction of the suction box (33) and the suction roll (30).

4. Suction roll according to any of claims 1- 3, **characterized in that** the suction box (33) has a substantially U-shaped wall structure.

5. Suction roll according to any of previous claims, **characterized in that** each seal (34; 35) is a wide seal and the width of the seal (34; 35) is 40-90 mm, advantageously 65-75 mm.

6. Suction roll according to any of previous claims, **characterized in that** the seal (34, 35) has two loading hoses (38A, 38B; 39A, 39B) for loading upper surface of the corresponding seal (34; 35) against the inner surface of the outer shell (31) of the suction roll (30).

7. Suction roll according to any of previous claims, **characterized in that** the seal (34; 35) has two lubrication grooves (48A, 48B; 49A, 49B) and two sealing edges (44A, 44B; 45A; 45B) extending to immediate vicinity of the inner surface of the outer shell (31) of the suction roll (30) and that next to each edge (44A, 44B; 45A; 45B) is located the respective lubrication groove (48A, 48B; 49A, 49B) and that the sealing edges (44A, 44B; 45A; 45B) are chamfered.

8. Suction roll according to any of previous claims, **characterized in that** the seal (34; 35) comprises two lubrication grooves (48A, 48B; 49A, 49B) and the lubrication grooves have bevel edges towards the middle part of the seal.

9. Suction roll according to any of previous claims, **characterized in that** the seal (34; 35) comprises two lubrication grooves (48A, 48B; 49A, 49B) and a channel structure (42; 43) for guiding the lubrication medium to lubrication grooves (48A, 48B; 49A, 49B).

10. Suction roll according to claim 9, **characterized in that** the lubrication channel structure (42; 43) comprises lubrication channels (42A, 42B; 43A, 43B) configured to guide the lubrication medium to the corresponding lubrication grooves (48A, 48B; 49A, 49B) and that the lubrication channel (42B, 43B) to the farther lubrication groove (48B, 49B) is in off-set so that the inlets to the lubrication channels (42A, 42B; 43A, 43B) are separate in axial direction of the seal (34, 35).

11. Seal setup of a suction roll, which setup comprises two seals (34, 35), which are by lubrication medium lubricated seals (34, 35), **characterized in that** the two seals (34, 35) are similar to each other and located in the seal setup as mirror images to each other.

12. Seal setup of a suction roll according claim 11, **characterized in that** the seal (34; 35) has two lubrication grooves (48A, 48B; 49A, 49B) and two sealing edges (44A, 44B; 45A; 45B) and that next to each edge (44A, 44B; 45A; 45B) is located the respective lubrication groove (48A, 48B; 49A, 49B) and that the upper surfaces of sealing edges (44A, 44B; 45A; 45B) is chamfered.

13. Seal setup of a suction roll according to claims 11 or 12, **characterized in that** the seal (34; 35) comprises two lubrication grooves (48A, 48B; 49A, 49B) and the lubrication grooves have bevel edges towards the middle part of the seal.

14. Seal setup of a suction roll according to any of claims 11-13, **characterized in that** the seal (34; 35) comprises two lubrication grooves (48A, 48B; 49A, 49B) and a channel structure (42; 43) for guiding the lubrication medium to lubrication grooves (48A, 48B; 49A, 49B).

15. Seal setup of a suction roll according to claim 14, **characterized in that** the lubrication channel structure (42; 43) comprises lubrication channels (42A, 42B; 43A, 43B) configured to guide the lubrication medium to the corresponding lubrication grooves (48A, 48B; 49A, 49B) and that the lubrication channel (42B, 43B) to the farther lubrication groove (48B, 49B) is in off-set so that the inlets to the lubrication channels (42A, 42B; 43A, 43B) are separate in axial direction of the seal (34, 35).
